# EUROPÄISCHE PATENTSCHRIFT

(11) **EP 2 226 219 B1**
(45) Veröffentlichungstag und Bekanntmachung des Hinweises auf die Patenterteilung: **12.12.2012**
(21) Anmeldenummer: 10466008.9
(22) Anmeldetag: 25.02.2010
(51) Int. Cl.: B60R 5/04

(54) **System eines herausnehmbaren Ladebodens**
System with a removable loading floor
Système d'un sol de chargement amovible

(30) Priorität: 02.03.2009 CZ 20090128
(43) Veröffentlichungstag der Anmeldung: 08.09.2010
(73) Patentinhaber: Skoda Auto a.s., 293 60 Mladá Boleslav (CZ)
(72) Erfinder: Ladislav, Kraus, 51236 Horní Branná (CZ)

(56) Entgegenhaltungen:
- WO-A1-2005/005203
- DE-A1-102007 031 339
- FR-A1- 2 785 243
- FR-A1- 2 884 197

## Beschreibung

### Technisches Gebiet

Die Erfindung betrifft ein System eines herausnehmbaren Ladebodens, insbesondere eines erhöhten Ladebodens im Fahrzeugkofferraum, der über dem Grundboden angebracht werden kann.

### Bisheriger Stand der Technik

Die Kofferräume bei heutigen Fahrzeugen haben, infolge der Bestrebung nach einem möglichst großen Volumen, in der Regel den Boden wesentlich niedriger als die Ladekante der Ladeöffnung ist. Deshalb sind sie nicht selten mit einem zusätzlichen erhöhten Ladeboden in der Regel in der Ebene der Ladekante versehen, der insbesondere die Entladung vereinfacht. Dieser Ladeboden ist wegen der Transportmöglichkeit von größeren Gegenständen herausnehmbar. Herausnehmbarer Ladeboden besteht in der Regel aus einer einfachen Platte, die an Seitenverkleidung des Kofferraums abgestützt ist. Die Platte kann im Hinterbereich mit einem Griff für einfacheres Anheben versehen werden, um den Zugang zum Raum unter dem erhöhten Ladeboden zu ermöglichen. Für einfacheres Handling und Ablegen beim Ausbau kann der Ladeboden auch im Wesentlichen in gleichgroße Teile zweigeteilt werden, die drehbar gegenseitig z.B. durch gemeinsamen Bezugsteppich verbunden sind. Beim Einbau in das Fahrzeug liegen beide Teile horizontal in gleicher Ebene, nach dem Ausbau aus dem Fahrzeug kann der Ladeboden gefaltet werden, wodurch er einen halbgroßen Raum einnimmt. Der Nachteil solcher Böden ist der freie Durchgang zwischen dem Kofferraumteil unter dem erhöhten Ladeboden und der Fahrgastzelle und zwar bei Fahrzeugen, bei denen der Grundboden im Wesentlichen in einer Ebene mit dem Boden der Fahrgastzelle liegt, an dem die Sitze befestigt sind. Dies ist der Fall der Mehrheit der Fahrzeuge mit herausnehmbaren oder einstellbaren Rücksitzen. Weiterer Nachteil ist die fehlende Sicherung des herausnehmbaren Ladebodens für den Fall eines Fahrzeugüberschlags, da er in der Regel im Kofferraum nur eingelegt und gegen eine Aufwärtsbewegung nicht gesichert ist.

Aus der DE 10 2007 031 339 A1 ist auch ein der den Oberbegriff des Anspuchs 1 einβpeilt, der aus zwei Plattenteile besteht, die zusammen einander durch ein erstes Scharnier verbunden sind, und durch ein zweiten Scharnier mit Hintersitzen verbunden sind. Solche Anordnung ermöglicht unter Anderem eine Umklappung des hinteren Plattenteiles vertikal von der Hinterkante des vorderen Plattenteils nach unten, und damit eine Separation des Laderaums unter dem vorderen Plattenteils vom Rest des Laderaums. Diese Ausführung des Ladebodens löst aber die oben erwähnten Nachteile nicht, weil es auch hier den freien Durchgang unter dem Hintersitzen vom Laderaum in einer Fahrgastzelle gibt.

### Darstellung der Erfindung

Die Aufgabe wird durch ein System eines herausnehmbaren Ladebodens nach dieser Erfindung gelöst.

Der Ladeboden besteht aus mindestens zwei Teilen, die mittels eines Scharniers gegenseitig drehbar verbunden sind. Das Scharnier ist vorteilhaft direkt durch das Deckmaterial des Ladebodens gebildet, d.h. in der Regel durch den an der Oberseite befestigten Teppich. In der Nutzposition des im Fahrzeug eingebauten Ladebodens schließen beide Teile im Wesentlichen einen rechten Winkel ein, wobei sich der erste Teil horizontal und der zweite Teil vertikal von der Vorderkante des ersten Teils in Richtung zum Grundboden erstreckt. Der erste Teil bildet so den eigentlichen erhöhten Ladeboden und der zweite Teil eine Querwand, die den Raum unter dem erhöhten Ladeboden absperrt. Beide Teile können gleich breit sein und sich über die ganze Breite des Kofferraumes erstrecken.

Die seitlichen Kofferraumverkleidungen weisen horizontale Flächen für die Abstützung des ersten Teils und eine vertikale Führung für die Einschiebung des zweiten Teils des Ladebodens auf. Die Breite der Führung entspricht der Stärke des zweiten Teils, damit die Geräuschentstehung während der Fahrt vermieden wird. Beim Einbau des Ladebodens wird zuerst der zweite Teil in die Führung eingeschoben und dann der erste Teil durch Drehung um den Scharnier nach unten geklappt, bis er auf die abstützenden Horizontalflächen der Seitenverkleidungen aufliegt. Der erste Teil kann in horizontaler Position nur mit eigenem Gewicht halten oder er kann im hinteren Bereich mit einer Raste versehen werden, die ihm gegen das Anheben sichert.

Die vertikale Führung ist vorteilhaft mit einer Sperrvorrichtung versehen, die zwischen entsperrter und versperrter Position verstellt werden kann. In der versperrten Position ist der zweite Teil gegen Aufwärtsvorschub in der Führung gesperrt. Nach einem Fahrzeugüberschlag beim Unfall kann der zweite Teil nicht aus der Führung ausfahren und der herausnehmbare Ladeboden sich nicht unkontrolliert im Kofferraum bewegen.

Die vorteilhafte Sperrvorrichtung weist einen zweiarmigen Winkelhebel auf, der drehbar um eine horizontale Achse, die parallel mit der Scharnierachse liegt, ist. Der erste Arm wirkt auf eine Sperrklinke ein, die in der versperrten Position in die Führung herausragt und der zweite Ladebodenteil weist eine Aussparung aus, welche dieser Sperrklinke entspricht. Der zweite Arm weist ein Betätigungselement auf, das in der versperrten Position im Wesentlichen in der Ebene der horizontalen Fläche für die Abstützung des ersten Bodenteils liegt und in der entsperrten Position über dieser Fläche liegt. Damit ist sichergestellt, dass beim Umklappen des ersten Teils in die horizontale Position der Hebel, infolge der Wirkung der Unterseite des ersten Teils auf das Betätigungselement, automatisch in die versperrte Position verdreht wird, in der die Sperrklinke in die Führung einfährt. Die Sperrklinke ist vorteilhaft ein Bestandteil des ersten Hebelarmes, kann jedoch auch durch Hebel über eine Übertragung betätigt werden. Dies kann vorteilhaft insbesondere bei langen Kofferräumen sein, wo der Hebel wegen besserer Zugänglichkeit für den Nutzer näher zur Ladeöffnung positioniert werden kann.

Die Sperrklinke weist auf der Oberseite eine Abschrägung aus, welche die Einführung des zweiten Teils in die Führung auch bei versperrten Position der Sperrklinke ermöglicht - mit der Endkante des zweiten Bodenteils wird die Sperrklinke bzw. Hebel über die Abschrägung in die entsperrte Position weggedrückt. Die Versperrung erfolgt dann automatisch nach dem Umklappen des ersten Ladebodenteils. Deshalb muss die Sperrvorrichtung vor dem Einbau nicht in die ensperrte Position manuell verstellt werden.

Das Betätigungselement ist senkrecht zur Drehebene des Hebels und ragt über die Seitenverkleidung in Kofferraum hinein. Dadurch ist eine ausreichende Berührungsfläche mit der Unterseite des ersten Teiles sichergestellt und insbesondere eine einfache manuelle Entsperrung der Sperrvorrichtung durch den Nutzer nach dem Anheben des ersten Teils, beim Ausbau des Ladebodens aus dem Fahrzeug.

Die Sperrvorrichtung ist vorteilhaft in der entsperrten sowie versperrten Position gegen Vorschub durch eine Arretiervorrichtung gesichert. Dadurch ist eine verlässliche Sicherung des zweiten Teils gegen Ausrücken aus der Führung und umgekehrt ein einfaches Ausrücken beim Ausbau des Ladebodens nach dem Anheben des ersten Ladebodenteils und manueller Entriegelung durch den Nutzer sichergestellt.

Die Arretierungsvorrichtung ist vorteilhaft durch einen gefederten Axialvorsprung am Hebel gebildet, der mit zwei Aussparungen in der Seitenverkleidung korrespondiert, welche der versperrten und entsperrten Position des Hebels entsprechen.

Das Betätigungselement neigt sich vorteilhaft zum Ende des zweiten Hebelarmes so, dass sich sein Ende in der entsperrten Position der Ebene der Horizontalfläche nähert. Falls beim Einbau des Ladebodens der Nutzer den zweiten Teil auf die horizontale Führung legt und in der Richtung nach vorne zur Führung schiebt, und der Hebel in der entsperrten Position ist, wird das Betätigungselement selbsttätig durch die Endkante des zweiten Teils gedrückt und der Hebel in die entsperrte Position versetzt, wodurch die Verschiebung des Bodens bis auf Anschlag ermöglicht wird. Um das Anfahren auf das Betätigungselement zu erleichtern, kann die Endkante des zweiten Teils mindestens in einem Teilbereich ihrer Länge eine Abschrägung aufweisen, die der Neigung des Betätigungselementes entspricht.

Die vertikale Führung besteht aus einem vorderen und hinteren Stützteil, wobei der vordere Stützteil der Führung vorteilhaft höher als die Horizontalfläche liegt. Dank solcher Anordnung ist der vordere Anschlag beim Vorschub des Ladebodens beim Einbau definiert und die Einschiebung des zweiten Bodenteils in die vertikale Führung erleichtert - der Nutzer legt den zweiten Bodenteil an einer beliebigen Stelle der horizontalen Fläche ein und durch ein Vorschub stützt sich die Endkante des zweiten Teils an dem vorderen Abstützteil der Führung ab. Die Einschiebung in die Führung erfolgt nach dem Anheben des ersten Bodenteils und seiner Vorwärtsschiebung. Der Selbsteinweisung des zweiten Teils in die Führung bei einem Vorwärtsschub hilft weitere vorteilhafte Ausführung, wo der seitliche Teil der Kofferraumverkleidung eine Einweisfläche aufweist, die sich vorwärts von der horizontalen Fläche zur Vertikalführung neigt. Solche Einweisfläche kann vorteilhaft auch der zweite Hebelarm an der Oberseite aufweisen, wobei die Einweisfläche sich vorwärts von der oberen Bedienungsfläche zum ersten Arm neigt. Solche Lösung ist besonders vorteilhaft, wenn die seitliche Verkleidung unzureichende Breite der horizontalen Fläche und der hinteren Stützteile der Führung im Bereich der Hebelposition aufweist oder diese Flächen nur zur Aussparung für den Hebel reichen.

### Übersicht der Figuren in den Zeichnungen

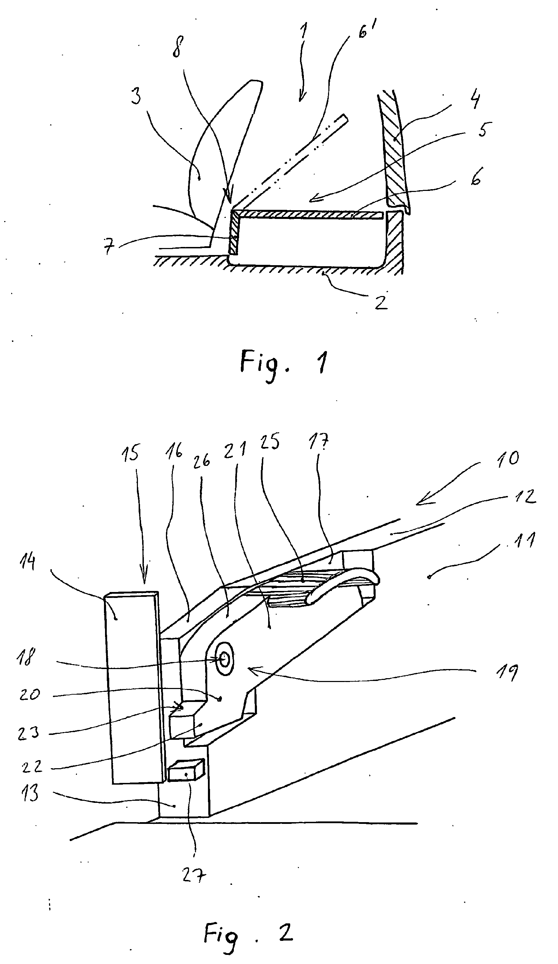

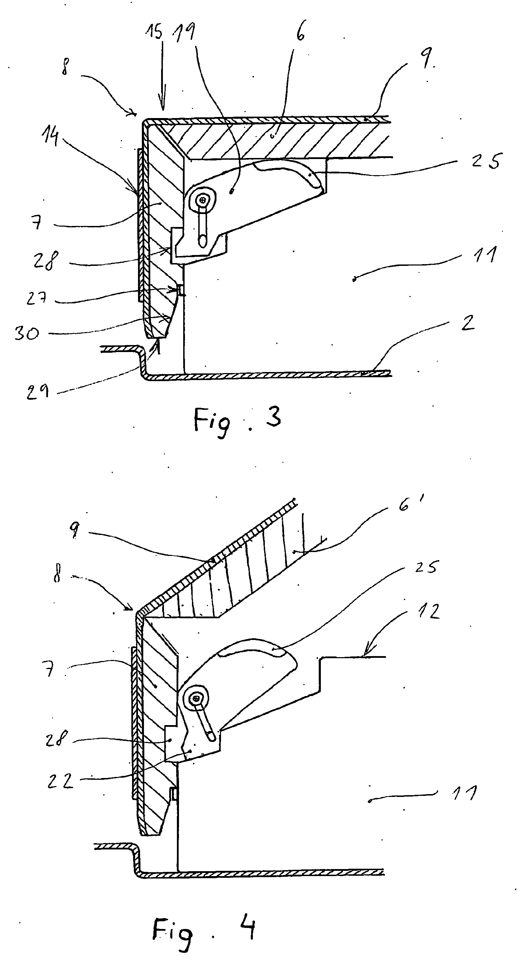

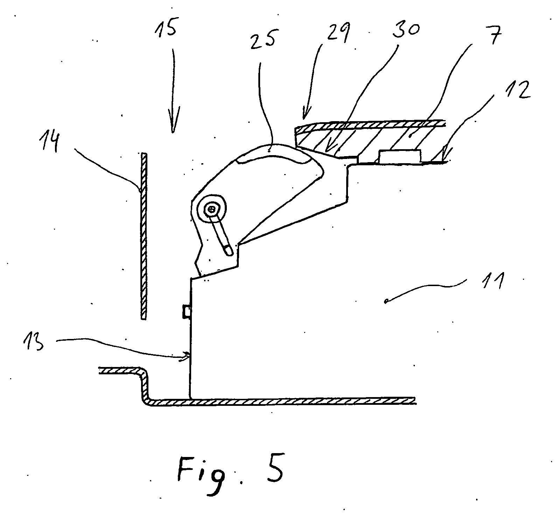

Die Fig. 1 stellt den vertikalen Längsschnitt des Fahrzeuges mit dem System des herausnehmbaren Ladebodens nach der Erfindung. In der Fig. 2 ist die Schrägsicht auf den Teil des Systems des herausnehmbaren Bodens dargestellt, der fest mit dem Fahrzeug verbunden ist. Fig. 3 stellt den vertikalen Längsschnitt des Systems in der Nutzposition dar und die Fig. 4 beim Ausbau des Bodens aus dem Fahrzeug bzw. beim Einbau. In der Fig. 5 ist die Situation, wo die Sperrvorrichtung in der entsperrten Position ist und der zweite Teil an der horizontalen Fläche geschoben wird.

### Ausführungsbeispiel der Erfindung

In den beigefügten Abbildungen ist das Beispiel einer der möglichen Ausführungen der Erfindung dargestellt. In der Fig. 1 ist das Fahrzeugheck mit Kofferraum 1 dargestellt, der von unten durch den Grundboden 2 abgeschlossen ist, auf dem die Hintersitze 3 befestigt sind. Der Zugang zum Kofferraum ist über die ausklappbare Heckklappe 4 ermöglicht. Über dem Grundboden 2 ist ein herausnehmbarer Ladeboden 5 nach der Erfindung eingebaut, bestehend aus dem horizontal positionierten ersten Teil 6 und vertikal positionierten zweiten Teil 7. Beide Teile sind mittels eines Scharniers 8 verbunden, das aus einem gemeinsamen Teppich 9 besteht, mit dem deren Oberseiten bezogen sind. Die dem Scharnier anliegenden Kanten beider Teile 6, 7 sind von der Unterseite unter dem Winkel 45° abgekantet. Der Ladeboden 5 ist hier in der Nutzposition dargestellt, für den Zugang zum Raum darunter bzw. für dessen Ausbau hebt der Nutzer den ersten Teil 6 des Ladebodens in die Position 6' an.

In der Fig. 2 ist der rechte Teil des Systems des herausnehmbaren Ladebodens dargestellt, der fest mit dem Fahrzeug verbunden ist. Ähnlicher spiegelbildlich invertierter Teil ist auch an der linken Seite des Fahrzeuges. Die seitliche Verkleidung 10 weist einen Seitenteil 11 auf, der ein Bestandteil dieser sein kann, oder an dieser z.B. mittels näher nicht abgebildeten Schrauben befestigt werden kann. Solche Lösung ermöglicht das konkrete Fahrzeug mit einem herausnehmbaren Ladeboden in Abhängigkeit vom Kundenwunsch auszustatten oder nicht. Der Seitenteil 11 weist an seiner Oberseite eine horizontale Fläche 12 zur Abstützung des ersten Teils 6 des Ladebodens 5 auf, die sich entlang des ganzen Kofferraumes erstreckt. In seinem vorderen Teil weist er eine vertikale Fläche 13 auf, die zusammen mit der parallelen Leiste 14 eine vertikale Führung 15 für den zweiten Teil 7 des Ladebodens 5 bildet. Die Leiste 14 kann direkt im Seitenteil 11 oder in der seitlichen Verkleidung 10 ausgeformt sein, oder an dieser als ein separater Teil befestigt werden. Die Leiste 14 greift auch über die horizontale Fläche 12 ein. Die vordere obere Ecke des Seitenteils 11 ist so abgeschrägt, dass sie eine Einweisfläche 16 bildet, die sich vorwärts von der horizontalen Fläche 12 zur vertikalen Führung 15 neigt. Die vordere obere Ecke des Seitenteils 11 ist axial versenkt und da drin ist der Hebel 19, drehbar um einen Bolzen 18, gelagert. Die Versenkung 17 kann in einen wesentlichen Teil der Seitenteilbreite 11 so eingreifen, dass die Horizontalfläche 12 sowie Vertikalfläche 13 nur zur Versenkung für den Hebel 19 eingreifen und die Einweisfläche 16 komplett fehlt. Der Drehumfang des Hebels ist durch die Form der Versenkung 17 eingeschränkt. Der Hebel 19 weist in dem vorderen Teil einen senkrechten ersten Arm 20 und einen zweiten Arm 21, der nach hinten aufwärts zur Horizontalfläche 12 gerichtet ist. Aus dem ersten Arm 20 ragt vorwärts eine Sperrklinke 22 aus, die in der versperrten Position über die Vertikalfläche 13 in die Führung 15 herausragt. Die Sperrklinke 22 ist an der Oberseite mit einer Abschrägung 23 versehen. Der zweite Arm 21 ist an dem oberen Ende mit einem krummen Betätigungselement 25 versehen, das sich in Richtung zum Ende des zweiten Arms 21 neigt und über den Seitenteil 11 weiter in den Kofferraum hineinragt. In der versperrten Position ist das Betätigungselement 25 flächenbündig mit der Ebene der Horizontalfläche 12, also sein höchster Punkt liegt im Wesentlichen in dieser Ebene. Dank des abfallenden Profils nähert sich das Betätigungselement 25 in der entsperrten Position zur Ebene der Horizontalfläche 12. Der zweite Arm 21 weist an seiner Oberseite eine Einweisfläche 26 aus, die sich vorwärts vom Betätigungselement 25 zum ersten Arm 20 neigt. Die Einweisfläche 26 korrespondiert mit der Einweisfläche 16 des Seitenteils 11, evtl. kann diese vollständig ersetzen. Der Hebel 19 enthält an seiner dem Seitenteil 11 anliegenden Seite einen näher nicht dargestellten, axial abgefederten Vorsprung, der in die entsprechende Aussparung im Seitenteil 11 passt. Diese Aussparrungen sind an Stellen verteilt, welche der Position des Vorsprungs in der versperrten und entsperrten Position entsprechen.

In der Fig. 3 ist das System mit dem Ladeboden 5 in der Nutzposition dargestellt, in der beide Teile 6, 7 einen rechten Winkel einschließen. Der zweite Teil 7 ist in der Führung 15 bis auf Anschlag 27 eingeschoben. Dieser Anschlag kann auch direkt durch den Grundboden 2 ersetzt werden, an dem sich das Ende des zweiten Teils 7 anlehnt. Der erste Teil liegt auf der Horizontalfläche 12 und lehnt sich am Bedienungselement 25 des Hebels 19 an, der in der versperrten Position ist. Im zweiten Teil 7 ist eine Aussparung 28 gebildet, in welche die Sperrklinke 22 herausragt und so sein Ausziehen aus der Führung 15 aufwärts verhindert. Der Hebel 19 ist in der versperrten Position arretiert, sodass auch nach dem Anheben des ersten Teiles 6 und Drehen um den Scharnier 8 nicht zur seiner Entsperrung kommt und der zweite Teil 7 aus der Führung 15 nicht ausgezogen werden kann. Die Entsperrung muss manuell vom Nutzer durch das Anheben des Bedienungselementes 25 an beiden Seiten des Kofferraumes vorgenommen werden. Solche Situation ist in der Fig.4 dargestellt. Der Hebel 19 wird gedreht, die Sperrklinke 22 wird aus der Aussparung 28 ausgeschoben und durch Ziehen aufwärts kann danach der zweite Teil 7 aus der Führung 15 ausgeschoben werden und der Ladeboden 5 aus dem Fahrzeug ausgebaut werden.

Beim Einbau ist es egal, ob der Hebel 19 in der versperrten oder entsperrten Position ist. Ist der Hebel 19 in der versperrten Position, wird er durch die Einschiebung des zweiten Teils 7 in die Führung 15 automatisch in die entsperrte Position gedreht, in dem seine Endkante 29 die Sperrklinke 22 nach hinten verschiebt.

Der zweite Teil 7 kann manuell in die Führung 15 gerichtet und nach unten eingeschoben werden, bis er auf den Anschlag 27 aufsetzt. Die weitere Möglichkeit besteht darin, dass der Ladeboden 5 auf die horizontale Führung 12 gelegt und vorwärts geschoben wird, bis er an die Leiste 14 anschlägt. Ist der Hebel 19 dabei in der entsperrten Position, wie in der Fig. 5 dargestellt ist, dreht sich durch die Wirkung der Endkante 29 des zweiten Teils auf das abfallende Betätigungselement 25 automatisch in die versperrte Position. In dieser Position hindert er dem weiteren Vorwärtsschub des zweiten Teils 7 nicht. Die Endkante 29 ist für einen leichteren Einlauf auf das Element 25 mit einer Abschrägung 30 versehen. Nach dem Vorwärtsschub des Ladebodens 5 bis auf Anschlag wird mit dem Anheben des ersten Teils 6 der zweite Teil 7 gedreht und an der Führungsfläche 16 des Seitenteils 11 bzw. der Einweisfläche 26 der Hebel nach unten verrutscht. Nach Verdrängung des ersten Teils 6 vorwärts wird der zweite Teil 7 in die Richtung der Führung 15 gedreht und rutscht in die Führung ein, wobei automatisch der Hebel 19 aus der versperrten in die entsperrte Position umgewendet wird. Zu seiner Umstellung zurück in die versperrte Position kommt es automatisch beim Ablegen des ersten Teils 6. Vor dem Aufsetzen der Rückseite des ersten Teiles 6 auf die Horizontalfläche 12 berührt sie das Betätigungselement 25 und drückt ihm nach unten und wendet den Hebel 19 in die versperrte Position um.

Die im Text angeführten Richtungen und Ebenen entsprechen der üblich geltenden Terminen bei der Fahrzeugbeschreibung, als Vorderteil des Ladebodens wird der dem Vorderteil des Fahrzeuges näherliegende Teil gemeint.

### Industrielle Nutzbarkeit

Ein System eines herausnehmbaren Ladebodens nach der Erfindung kann bei allen PKW mit einem erhöhten Ladeboden eingesetzt werden.

## Patentansprüche

1. System eines herausnehmbaren Ladebodens, insbesondere eines erhöhten Ladebodens im Fahrzeugkofferraum (1), der über sein Grundboden (2) angebracht werden kann, umfassend einen Ladeboden (5), der mindestens aus zwei Teilen (6, 7) besteht, die gegenseitig drehbar mit einem Scharnier (8) verbunden sind, wobei der erste Teil eine dem_Vorderteil des Fahrzeuges zugewandte Vorderkante aufweist, **dadurch gekennzeichnet, dass** in der Nutzposition des im Fahrzeug eingebauten Ladebodens (5) diese beide Teile (6, 7) im Wesentlichen einen rechten Winkel einschließen, wobei der erste Teil (6) sich horizontal erstreckt und der zweite Teil (7) sich vertikal von der Vorderkante des ersten Teils (6) in Richtung zum Grundboden (2) erstreckt, und dass die Seitenteile (10) der Kofferraumverkleidung horizontale Flächen (12) für die Abstützung des ersten Bodenteils (6) und vertikale Führung (15) für die Einschiebung des zweiten Bodenteils (7) aufweisen.

2. System eines herausnehmbaren Ladebodens nach Anspruch 1, **dadurch gekennzeichnet, dass** die vertikale Führung (15) mit einer Sperrvorrichtung versehen Ist, die zwischen versperrten und entsperrten Position verstellbar ist, wobei in der versperrten Position der zweite Bodenteil (7) wenigstens gegen Aufwärtsvorschub in der vertikalen Führung (15) gesperrt ist.

3. System eines herausnehmbaren Ladebodens nach Anspruch 2, **dadurch gekennzeichnet, dass** die Sperrvorrichtung einen doppelarmigen Winkelhebel (19) aufweist, der um eine mit der Schamierachse (8) parallellaufende horizontale Achse drehbar ist, wobei der erste Arm (20) auf die Sperrklinke einwirkt (22), die in der versperrten Position in die Führung (15) herausragt, und wobei der zweite Arm (21) ein Betätigungselement aufweist (25), das in der versperrten Position flächenbündig mit der Ebene der Horizontalfläche ist (12) und in der entsperrten Position über der Horizontalfläche (12) liegt, und wobei der zweite Bodenteil (7) eine mit der Sperrklinke (22) korrespondierende Aussparrung (28) aufweist.

4. System eines herausnehmbaren Ladebodens nach Anspruch 3, **dadurch gekennzeichnet, dass** die Sperrklinke (22) ein Bestandteil des ersten Arms (20) ist.

5. System eines herausnehmbaren Ladebodens nach Anspruch 4, **dadurch gekennzeichnet, dass** die Sperrklinke (22) an deren Oberseite eine Abschrägung (23) aufweist.

6. System eines herausnehmbaren Ladebodens nach einem der Ansprüche 3 bis 5, **dadurch gekennzeichnet, dass** das Betätigungselement (25) senkrecht zur Drehebene des Hebels (19) ist und über die seitliche Verkleidung (10,11) in Richtung den Kofferraum (1) hineinragt.

7. System eines herausnehmbaren Ladebodens nach einem der Ansprüche 2 bis 6 , **dadurch gekennzeichnet, dass** die Sperrvorrichtung in der versperrten und entsperrten Position gegen Bewegung durch eine Arretierungsvorrichtung gesichert ist.

8. System eines herausnehmbaren Ladebodens nach Anspruch 7, **dadurch gekennzeichnet, dass** die Arretierungsvorrichtung einen abgefederten Axialvorsprung am Hebel umfasst, der mit den Aussparungen in den seitlichen Verkleidungen korrespondiert.

9. System eines herausnehmbaren Ladebodens nach einem der Ansprüche 3 bis 8, **dadurch gekennzeichnet, dass** das Betätigungselement (25) sich in Richtung zum Ende des zweiten Armes (21) des Hebels (19) neigt, sodass sich sein Ende In der entsperrten Position zur Ebene der Horizontalfläche (12) nähert.

10. System eines herausnehmbaren Ladebodens nach einem der vorherigen Ansprüche, **dadurch gekennzeichnet, dass** die Endkante (29) des zweiten Teils (7) wenigstens im Teil derer Länge eine Abschrägung (30) aufweist.

11. System eines herausnehmbaren Ladebodens nach einem der Ansprüche 1 bis 10, **dadurch gekennzeichnet, dass** die Führung (15) aus einem vorderen Stützteil (14) und einem hinteren Stützteil (13) besteht, wobei sich der vordere Stützteil (14) höher als die horizontale Fläche erstreckt (12).

12. System eines herausnehmbaren Ladebodens nach einem der Ansprüche 1 bis 11, **dadurch gekennzeichnet, dass** der Seitenteil (10, 11) der Kofferraumverkleidung eine Einweisfläche aufweist (16), die sich vorwärts von der horizontalen Fläche (12) zur Führung (15) neigt.

13. System eines herausnehmbaren Ladebodens nach einem der Ansprüche 3 bis 12, **dadurch gekennzeichnet, dass** der zweite Arm (21) des Hebels (19) an seiner Oberseite eine Führungsfläche aufweist (26), die sich vorwärts vom Betätigungselement (25) zum ersten Arm (20) neigt.

## Claims

1. System with a removable loading floor, in particular a raised loading floor in the vehicle luggage compartment (1), which can be mounted above the main floor (2) thereof, comprising a loading floor (5) which consists of at least two parts (6, 7) which are connected in a mutually rotatable manner to a hinge (8), wherein the first part has a front edge facing the front part of the vehicle, **characterized in that** said two parts (6, 7) substantially enclose a right angle in the use position of the loading floor (5) installed in the vehicle, wherein the first part (6) extends horizontally and the second part (7) extends vertically from the front edge of the first part (6) in the direction of the main floor (2), and **in that** the side parts (10) of the luggage compartment lining have horizontal surfaces (12) for supporting the first floor part (6) and a vertical guide (15) for the sliding of the second floor part (7).

2. System with a removable loading floor according to Claim 1, **characterized in that** the vertical guide (15) is provided with a blocking device which is adjustable between a blocked and unblocked position, wherein, in the blocked position, the second floor part (7) is blocked at least against being pushed upwards in the vertical guide (15).

3. System with a removable loading floor according to Claim 2, **characterized in that** the blocking device has a double-armed angle lever (19) which is rotatable about a horizontal axis running parallel to the hinge axis (8), wherein the first arm (20) acts on the catch (22) which, in the blocked position, protrudes into the guide (15), and wherein the second arm (21) has an actuating element (25) which, in the blocked position, is flush with the plane of the horizontal surface (12) and, in the unblocked position, lies above the horizontal surface (12), and wherein the second floor part (7) has a recess (28) corresponding to the catch (22).

4. System with a removable loading floor according to Claim 3, **characterized in that** the catch (22) is part of the first arm (20).

5. System with a removable loading floor according to Claim 4, **characterized in that** the upper side of the catch (22) has a bevel (23).

6. System with a removable loading floor according to one of Claims 3 to 5, **characterized in that** the actuating element (25) is perpendicular to the rotational plane of the lever (19) and projects over the lateral lining (10, 11) in the direction of the luggage compartment (1).

7. System with a removable loading floor according to one of Claims 2 to 6, **characterized in that** the blocking device is secured in the blocked and unblocked position against movement by means of a blocking device.

8. System with a removable loading floor according to Claim 7, **characterized in that** the blocking device comprises a sprung axial projection on the lever, said axial projection corresponding to the recesses in the lateral lining.

9. System with a removable loading floor according to one of Claims 3 to 8, **characterized in that** the actuating element (25) is inclined in the direction of the end of the second arm (21) of the lever (19) such that, in the unblocked position, the end of said actuating element moves close to the plane of the horizontal surface (12).

10. System with a removable loading floor according to one of the preceding claims, **characterized in that** the end edge (29) of the second part (7) has a bevel (30) at least in part of the length thereof.

11. System with a removable loading floor according to one of Claims 1 to 10, **characterized in that** the guide (15) consists of a front supporting part (14) and a rear supporting part (13), wherein the front supporting part (14) extends higher than the horizontal surface (12).

12. System with a removable loading floor according to one of Claims 1 to 11, **characterized in that** the side part (10, 11) of the luggage compartment lining has a directing-in surface (16) which is inclined forwards from the horizontal surface (12) to the guide (15).

13. System with a removable loading floor according to one of Claims 3 to 12, **characterized in that** the upper side of the second arm (21) of the lever (19) has a guide surface (26) which is inclined forwards from the actuating element (25) to the first arm (20).

## Revendications

1. Système d'un sol de chargement amovible, en particulier d'un sol de chargement rehaussé dans le coffre à bagages d'un véhicule (1), qui peut être monté par le biais de son sol de base (2), comprenant un sol de chargement (5) qui se compose d'au moins deux parties (6, 7) qui sont connectées mutuellement de manière rotative par une charnière (8), la première partie présentant un bord avant tourné vers la partie avant du véhicule, **caractérisé en ce que** dans la position d'utilisation du sol de chargement (5) installé dans le véhicule, ces deux parties (6, 7) forment essentiellement un angle droit, la première partie (6) s'étendant horizontalement et la deuxième partie (7) s'étendant verticalement depuis le bord avant de la première partie (6) dans la direction du sol de base (2), et **en ce que** les parties latérales (10) de l'habillage du coffre à bagages présentent des surfaces horizontales (12) pour supporter la première partie de sol (6) et un guidage vertical (15) pour l'insertion de la deuxième partie de sol (7).

2. Système d'un sol de chargement amovible selon la revendication 1, **caractérisé en ce que** le guidage vertical (15) est pourvu d'un dispositif de blocage qui peut être réglé entre des positions bloquée et débloquée, la deuxième partie de sol (7) étant bloquée au moins contre un déplacement vers le haut dans le guidage vertical (15), dans la position bloquée.

3. Système d'un sol de chargement amovible selon la revendication 2, **caractérisé en ce que** le dispositif de blocage présente un levier coudé (19) à deux bras, qui peut tourner autour d'un axe horizontal s'étendant parallèlement à l'axe de la charnière (8), le premier bras (20) agissant sur le cliquet de blocage (22) qui fait saillie vers l'extérieur dans la position bloquée dans le guidage (15), et le deuxième bras (21) présentant un élément d'actionnement (25) qui, dans la position bloquée, est en affleurement avec le plan de la surface horizontale (12) et qui se situe au-dessus de la surface horizontale (12) dans la position débloquée, et la deuxième partie de sol (7) présentant un évidement (28) correspondant au cliquet de blocage (22).

4. Système d'un sol de chargement amovible selon la revendication 3, **caractérisé en ce que** le cliquet de blocage (22) est un composant du premier bras (20).

5. Système d'un sol de chargement amovible selon la revendication 4, **caractérisé en ce que** le cliquet de blocage (22) présente sur son côté supérieur un biseautage (23).

6. Système d'un sol de chargement amovible selon l'une quelconque des revendications 3 à 5, **caractérisé en ce que** l'élément d'actionnement (25) est perpendiculaire au plan de rotation du levier (19) et pénètre par le biais de l'habillage latéral (10, 11) dans la direction du coffre à bagages (1).

7. Système d'un sol de chargement amovible selon l'une quelconque des revendications 2 à 6, **caractérisé en ce que** le dispositif de blocage, dans la position bloquée et dans la position débloquée, est fixé contre tout mouvement par un dispositif d'arrêt.

8. Système d'un sol de chargement amovible selon la revendication 7, **caractérisé en ce que** le dispositif d'arrêt comprend une saillie axiale à ressort sur le levier, laquelle correspond aux évidements dans les habillages latéraux.

9. Système d'un sol de chargement amovible selon l'une quelconque des revendications 3 à 8, **caractérisé en ce que** l'élément d'actionnement (25) est incliné dans la direction de l'extrémité du deuxième bras (21) du levier (19), de sorte que son extrémité se rapproche dans la position débloquée du plan de la surface horizontale (12).

10. Système d'un sol de chargement amovible selon l'une quelconque des revendications précédentes, **caractérisé en ce que** le bord d'extrémité (29) de la deuxième partie (7) présente au moins dans une partie de sa longueur un biseautage (30).

11. Système d'un sol de chargement amovible selon l'une quelconque des revendications 1 à 10, **caractérisé en ce que** le guidage (15) se compose d'une partie de support avant (14) et d'une partie de support arrière (13), la partie de support avant (14) s'étendant plus haut que la surface horizontale (12).

12. Système d'un sol de chargement amovible selon l'une quelconque des revendications 1 à 11, **caractérisé en ce que** la partie latérale (10, 11) de l'habillage du coffre à bagages présente une surface d'installation (16) qui est inclinée vers l'avant depuis la surface horizontale (12) vers le guidage (15).

13. Système d'un sol de chargement amovible selon l'une quelconque des revendications 3 à 12, **caractérisé en ce que** le deuxième bras (21) du levier (19) présente sur son côté supérieur une surface de guidage (26) qui est inclinée vers l'avant depuis l'élément d'actionnement (25) vers le premier bras (20).
